# EUROPEAN PATENT APPLICATION

(11) **EP 4 807 900 A1**
(43) Date of publication of application: **16.09.2026**
(21) Application number: 24899744.7
(22) Date of filing: 29.11.2024
(51) Int. Cl.: H01Q 21/00, G01S 13/93

(54) **ANTENNA ARRAY, RADAR, ELECTRONIC DEVICE, AND VEHICLE**

(30) Priority: 06.12.2023 CN 202311667808
(71) Applicant: Huawei Technologies Co., Ltd., Shenzhen, Guangdong 518129 (CN)
(72) Inventor: WANG, Zhaoke, Shenzhen, Guangdong 518129 (CN); WANG, Qiyuan, Shenzhen, Guangdong 518129 (CN); JIA, Runqiang, Shenzhen, Guangdong 518129 (CN); HE, Yin, Shenzhen, Guangdong 518129 (CN)
(74) Representative: Isarpatent
(86) International application number: PCT/CN2024/135776
(87) International publication number: WO 2025/119104

(57) **Abstract**

Embodiments of this application provide an antenna array, a radar, an electronic device, and a vehicle, relating to the field of antenna technologies. The antenna array includes a transmit antenna array and a receive antenna array. The transmit antenna array and the receive antenna array are configured to form a virtual array. The transmit antenna array includes at least two transmit subarrays spaced apart along a first direction, and a spacing between two adjacent transmit subarrays along the first direction is less than or equal to an aperture length of the receive antenna array along a second direction. The receive antenna array includes at least two receive subarrays arranged along the second direction, and each of the receive subarrays includes at least two receive antennas spaced apart along the second direction. The receive antenna array satisfies a formula: 0<|dₙ-dₙ₋₁|≤0.5λ. The antenna array provided in embodiments of this application is characterized by a large array aperture, high resolution, no grating lobes, and low side lobes.

## Description

This application claims priority to Chinese Patent Application No. 202311667808.0, filed with the China National Intellectual Property Administration on December 6, 2023 and entitled "ANTENNA ARRAY, RADAR, ELECTRONIC DEVICE, AND VEHICLE", which is incorporated herein by reference in its entirety.

### TECHNICAL FIELD

Embodiments of this application relate to the field of antenna technologies, and in particular, to an antenna array, a radar, an electronic device, and a vehicle.

### BACKGROUND

As application scenarios (such as a high-speed scenario and an urban scenario) evolve and expand, traffic radars move toward higher resolution, a long distance, and a large array. The traffic radar includes an antenna and a processing module. The antenna includes a plurality of units arranged in an array. The processing module transmits RF signals via the antenna. The antenna may be further configured to receive an echo signal reflected from an obstacle and transmit the echo signal to the processing module. The processing module obtains location information such as a distance, a speed, and an angle based on the transmitted signal. However, when the antenna achieves a large array aperture and high resolution, a grating lobe often appears, degrading antenna performance. Therefore, suppressing grating lobes while implementing large array space and high angular resolution becomes an urgent problem to be resolved.

### SUMMARY

Embodiments of this application provide an antenna array, a radar, an electronic device, and a vehicle, so that the antenna array is characterized by a large array aperture, high resolution, no grating lobes, and low side lobes, thereby improving performance of the antenna array.

A first aspect of this application provides an antenna array, including a transmit antenna array and a receive antenna array. The transmit antenna array and the receive antenna array are configured to form a virtual array. The transmit antenna array includes at least two transmit subarrays spaced apart along a first direction, and a spacing between two adjacent transmit subarrays along the first direction is less than or equal to an aperture length of the receive antenna array along a second direction. The receive antenna array includes at least two receive subarrays arranged along the second direction, and each of the receive subarrays includes at least two receive antennas spaced apart along the second direction. The receive antenna array satisfies a formula: 0<|dₙ-dₙ₋₁|≤0.5λ, where dₙ is a spacing between two adjacent receive antennas in an n^{th} receive subarray along the second direction, dₙ₋₁ is a spacing between two adjacent receive antennas in an (n-1)^{th} receive subarray along the second direction, λ is an operating wavelength of the antenna array, and n is a positive integer.

When the receive antenna array 300 satisfies a formula: 0<|dₙ-dₙ₋₁|≤0.5λ, second receive spacings of at least two of the receive subarrays in the receive antenna array are different, and the spacing between two adjacent transmit subarrays along the first direction is less than or equal to the aperture length of the receive antenna array along the second direction, the virtual array may be formed by a plurality of regular arrays with unequal spacings. Therefore, the antenna array can be characterized by a large array aperture, high resolution, no grating lobes, and low side lobes. In addition, an appropriate transmit antenna and receive antenna may be selected based on angle information of side lobes in the antenna array, thereby further reducing side-lobe energy in the antenna array.

In an arraying process in which the transmit antenna array and the receive antenna array forms the virtual array, there is a location overlapping area between two adjacent receive subarrays, and there is a half-wavelength small array with an array element spacing less than or equal to 0.5λ in the location overlapping area. The array is characterized by no grating lobes and low side lobes, and may provide a new solution to false alarms caused by a plurality of targets and a large reflection target. In addition, because the virtual array is formed by the plurality of regular arrays with unequal spacings, during backend algorithm processing, a half-wavelength large array with no grating lobes may be obtained through array interpolation, so that side-lobe energy can be further reduced, thereby helping further improve performance of the antenna.

In a possible implementation, a spacing between two adjacent transmit subarrays along the first direction is greater than or equal to zero. In this way, it can be ensured that the transmit antenna array and the receive antenna array can form the virtual array, so that the antenna array is characterized by a large array aperture, high resolution, no grating lobes, and low side lobes.

In a possible implementation, the transmit antenna array includes at least two first transmit spacings, at least two of the first transmit spacings in the transmit antenna array are the same or all of the first transmit spacings in the transmit antenna array are different, and a spacing between two adjacent transmit subarrays along the first direction is defined as the first transmit spacing. In this way, design difficulty of the transmit antenna array can be reduced while the antenna array is characterized by a large array aperture, high resolution, no grating lobes, and low side lobes.

In a possible implementation, each transmit subarray includes at least one transmit antenna, where quantities of transmit antennas in at least two of the transmit subarrays in the transmit antenna array are the same; or quantities of transmit antennas in all of the transmit subarrays in the transmit antenna array are different. An aperture of the virtual array, a location of a side lobe, and a quantity of side lobes can be flexibly adjusted by adjusting a quantity of transmit antennas in the transmit subarray.

In a possible implementation, the receive antenna array further satisfies a formula: 0≤dₘ≤(dₙ+dₙ₋₁), where dₘ is a spacing between the n^{th} receive subarray and the (n-1)^{th} receive subarray along the second direction, and m is a positive integer.

According to the formula: 0 ≤dₘ≤(dₙ+dₙ₋₁), an aperture of the virtual array and locations and a quantity of side lobes can be flexibly adjusted, to increase an application range of the antenna array.

In a possible implementation, the receive antenna array includes at least two first receive spacings, at least two of the first receive spacings in the receive antenna array are the same or all of the first receive spacings in the receive antenna array are different, and a spacing between two adjacent receive subarrays along the first direction is defined as the first receive spacing. In this way, design difficulty of the receive antenna array can be reduced while the antenna array is characterized by a large array aperture, high resolution, no grating lobes, and low side lobes.

In a possible implementation, the receive antenna array includes at least one first receive spacing, at least one first receive spacing in the receive antenna array is equal to zero, and a spacing between two adjacent receive subarrays along the first direction is defined as the first receive spacing. The first receive spacing is equal to zero, so that a size of the receive antenna array along the second direction can be reduced, which helps reduce difficulty in arranging the receive antenna array.

In a possible implementation, two adjacent receive subarrays corresponding to the at least one first receive spacing equal to zero share a same receive antenna. When the first receive spacing is equal to zero, the two adjacent receive subarrays corresponding to the first receive spacing equal to zero share the same receive antenna, so that a quantity of receive antennas can be reduced while the antenna array is characterized by a large array aperture, high resolution, no grating lobes, and low side lobes, thereby helping reduce the size of the receive antenna array along the second direction.

In a possible implementation, quantities of receive antennas in at least two of the receive subarrays in the receive antenna array are the same; or quantities of receive antennas in all of the receive subarrays in the receive antenna array are different. An aperture of the virtual array, a location of a side lobe, and a quantity of side lobes can be flexibly adjusted by adjusting a quantity of receive antennas in the receive subarray.

In a possible implementation, at least one receive subarray includes at least two second receive spacings, at least two of the second receive spacings in the at least one receive subarray are the same, and a spacing between two adjacent receive antennas in a same receive subarray along the second direction is defined as the second receive spacing. An aperture of the virtual array, a location of a side lobe, and a quantity of side lobes can be flexibly adjusted by controlling a spacing between a plurality of receive antennas in the receive subarray.

A second aspect of this application provides a radar, including the antenna array according to any one of the implementations of the first aspect.

A third aspect of this application provides an electronic device, including the antenna array according to any one of the implementations of the first aspect, or including the radar according to the second aspect.

A fourth aspect of this application provides a vehicle, including the antenna array according to any one of the implementations of the first aspect, or including the radar according to the second aspect.

### BRIEF DESCRIPTION OF DRAWINGS

FIG. 1 is a diagram of a structure of a radar according to an embodiment of this application;
FIG. 2 is a diagram of a structure of a first antenna array according to an embodiment of this application;
FIG. 3 is a diagram of a structure of a receive antenna array different from a receive antenna array in FIG. 2 according to an embodiment of this application;
FIG. 4 is a diagram of a structure of a second antenna array according to an embodiment of this application;
FIG. 5 is a diagram of an arraying process in which the antenna array in FIG. 4 forms a virtual array;
FIG. 6 is a diagram of location information of the virtual array formed by the antenna array in FIG. 4;
FIG. 7 shows an array factor pattern of the virtual array shown in FIG. 6 during scanning at 0°;
FIG. 8 shows an array factor pattern of the virtual array shown in FIG. 6 during scanning at 60°;
FIG. 9 is a diagram of location information of the virtual array in FIG. 6 after backend algorithm processing;
FIG. 10 shows an array factor pattern of the virtual array in FIG. 9 during scanning at 60°;
FIG. 11 is a diagram of a structure of a third antenna array according to an embodiment of this application;
FIG. 12 is a diagram of an arraying process in which the antenna array in FIG. 11 forms a virtual array;
FIG. 13 is a diagram of location information of the virtual array formed by the antenna array in FIG. 11;
FIG. 14 shows an array factor pattern of the virtual array shown in FIG. 13 during scanning at 0°;
FIG. 15 shows an array factor pattern of the virtual array shown in FIG. 13 during scanning at 60°;
FIG. 16 is a diagram of location information of the virtual array in FIG. 13 after backend algorithm processing; and
FIG. 17 shows an array factor pattern of the virtual array in FIG. 16 during scanning at 60°.

Descriptions of reference numerals:
100: radar;
110: antenna array; 120: radio frequency module; 130: processing module;
200: transmit antenna array; 210: transmit subarray; 211: transmit antenna;
300: receive antenna array; 310: receive subarray; 311: receive antenna.

### DESCRIPTION OF EMBODIMENTS

Currently, a traffic radar includes a multiple-input multiple-output (multiple-input multiple-output, MIMO) antenna, a processing unit, and a radio frequency unit. The multiple-input multiple-output antenna includes a plurality of receive antennas and a plurality of transmit antennas. In other words, the multiple-input multiple-output antenna includes a plurality of receive channels and a plurality of transmit channels. Therefore, the multiple-input multiple-output antenna may form a virtual array antenna. A transmit channel of the radio frequency unit is connected to a transmit antenna, and a receive channel of the radio frequency unit is connected to a receive channel. A radio frequency signal transmitted by the transmit channel of the radio frequency unit is radiated via the transmit antenna. The radio frequency signal is reflected by a target object to form an echo signal. The echo signal is received by a receive antenna. The radio frequency unit may further perform processing such as frequency mixing and analog-to-digital conversion on the echo signal received by the receive antenna, and transmit the processed echo signal to the processing unit. The processing unit is configured to perform operations such as Fourier transform and constant false-alarm rate (constant false-alarm rate, CFAR) detection on the echo signal, to determine information such as a distance, a speed, and an azimuth of a target based on the received echo signal.

However, although the multiple-input multiple-output antenna can achieve a large array aperture and high resolution, a grating lobe may appear, degrading antenna performance. In addition, numerous side lobes with high energy results in false alarms.

In view of this, embodiments of this application provide an antenna array 110, a radar 100, an electronic device, and a vehicle. The antenna array 110 can be characterized by a large array aperture, high resolution, no grating lobes, and low side lobes. In addition, a virtual array formed by the antenna array 110 includes a small array with no grating lobes and an array element spacing less than or equal to 0.5λ, reducing side-lobe energy to mitigate false alarms.

The radar 100 provided in embodiments of this application may be used in a plurality of fields. For example, the radar 100 provided in embodiments of this application may include but is not limited to a vehicle-mounted radar, a traffic radar, a radar for an uncrewed aerial vehicle, and the like. In embodiments of this application, an example in which the traffic radar serves as the radar 100 is provided for description. A specific type of the traffic radar is not limited herein. For example, the traffic radar may be a traffic millimeter-wave radar.

The radar 100 provided in embodiments of this application may be used in an electronic device or a vehicle. The electronic device may include but is not limited to a traffic light, an uncrewed aerial vehicle, a sales terminal, an on-board computer, and the like. The vehicle may be a car, a train, an airplane, a ship, a bicycle, a tricycle, or the like. The vehicle may be a fuel vehicle, an electric vehicle, a hybrid vehicle light, or the like.

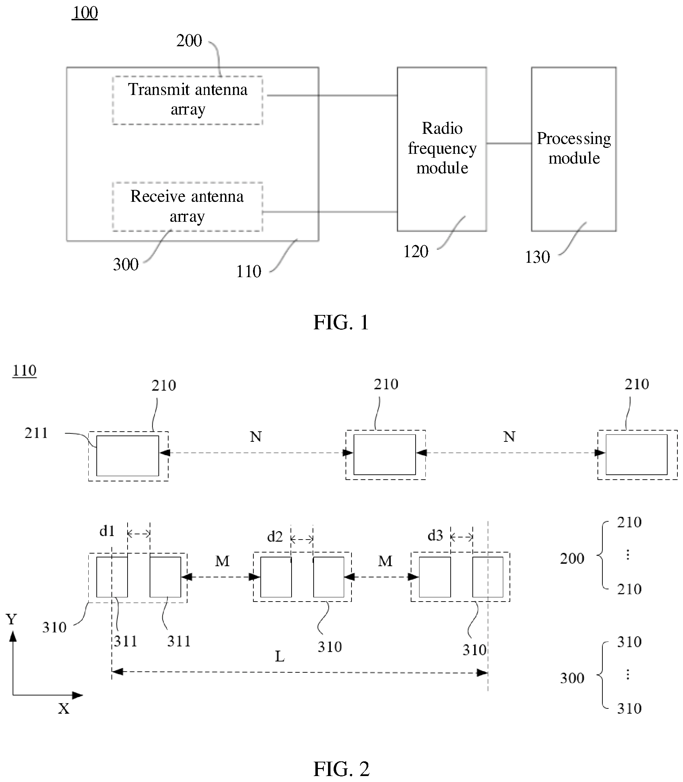

FIG. 1 is a diagram of a structure of a radar according to an embodiment of this application. Refer to FIG. 1. The radar 100 provided in embodiments of this application includes an antenna array 110, a radio frequency module 120, and a processing module 130. The antenna array 110 includes a transmit antenna array 200 and a receive antenna array 300. The transmit antenna array 200 and the receive antenna array 300 enable a multiple-input multiple-output architecture for the antenna array 110, and may form a virtual array. A radio frequency signal transmitted by a transmit channel of the radio frequency module 120 is radiated via the transmit antenna array 200. An echo signal is formed after the radio frequency signal encounters an obstacle. A receive channel of the radio frequency module 120 may receive the echo signal via a receive antenna 311, and the radio frequency module 120 further transmits the received echo signal to the processing module 130. The processing module 130 performs operations such as Fourier transform and constant false-alarm rate detection on the echo signal, to determine information such as a distance, a speed, and an azimuth of a target based on the received echo signal.

The antenna array 110 provided in embodiments of this application forms a virtual antenna array 110 by using a multiple-input multiple-output (MIMO) antenna system, so that an array aperture can be increased while reducing a quantity of transmit channels and receive channels. Therefore, the antenna array 110 is characterized by a large array aperture and high resolution. In addition, the antenna array 110 is designed follows irregular array design, so that the antenna array 110 can be characterized by a large array, high resolution, no grating lobes, and low side lobes. In addition, the virtual array formed by the antenna array 110 includes a small array with no grating lobes and an array element spacing less than or equal to 0.5λ, reducing side-lobe energy to mitigate false alarms.

It should be noted that, in addition to being used in the radar 100, the antenna array 110 provided in embodiments of this application may be alternatively used in an electronic device or a vehicle.

The following describes implementations of the antenna array 110 provided in embodiments of this application.

FIG. 2 is a diagram of a structure of a first antenna array according to an embodiment of this application. Refer to FIG. 2. The antenna array 110 may include a transmit antenna array 200 and a receive antenna array 300. The transmit antenna array 200 and the receive antenna array 300 are configured to form a virtual array, so that the antenna array 110 may be in a MIMO antenna system, a larger array may be virtually formed, and an aperture of the antenna array 110 is increased to obtain higher angular resolution. The transmit antenna array 200 is configured to transmit a radio frequency signal. The radio frequency signal forms an echo signal after being reflected by a target object. The receive antenna array 300 is configured to receive the echo signal.

A relative location relationship between the transmit antenna array 200 and the receive antenna array 300 is not limited herein. For example, refer to FIG. 2. In a vertical direction (for example, a Y direction in FIG. 2), a projection of the transmit antenna array 200 partially overlaps a projection of the receive antenna array 300. Certainly, a projection of the transmit antenna array 200 may not overlap a projection of the receive antenna array 300. Refer to FIG. 2. In a horizontal direction (for example, an X direction in FIG. 2), a projection of the transmit antenna array 200 does not overlap a projection of the receive antenna array 300. Certainly, a projection of the transmit antenna array 200 may alternatively at least partially overlap a projection of the receive antenna array 300.

The transmit antenna array 200 may include at least two transmit subarrays 210 arranged along a first direction. For example, as shown in FIG. 2, the transmit antenna array 200 may include three transmit subarrays 210 spaced apart along the first direction. Certainly, there may alternatively be more than three or fewer than three transmit subarrays 210. The first direction may be parallel to the horizontal direction (for example, the X direction in FIG. 2). Certainly, the first direction may alternatively be parallel to the vertical direction (for example, the Y direction in FIG. 2), or the first direction may intersect and not perpendicular to one of the horizontal direction and the vertical direction.

A spacing (shown by N in FIG. 2) between two adjacent transmit subarrays 210 along the first direction may be less than or equal to an aperture length (shown by L in FIG. 2) of the receive antenna array 300 along a second direction. For example, as shown in FIG. 2, the spacing between two adjacent transmit subarrays 210 along the first direction may be less than the aperture length (shown by L in FIG. 2) of the receive antenna array 300 along the second direction. Certainly, the spacing between two adjacent transmit subarrays 210 along the first direction may alternatively be equal to the aperture length of the receive antenna array 300 along the second direction. Refer to FIG. 2. The second direction may be parallel to the horizontal direction (for example, the X direction in FIG. 2). Certainly, the second direction may alternatively be parallel to the vertical direction (for example, the Y direction in FIG. 2), or the second direction may intersect and not perpendicular to one of the horizontal direction and the vertical direction. In addition, because the first direction is parallel to the horizontal direction, the first direction is parallel to the second direction. However, the first direction may alternatively be perpendicular to the second direction, or the first direction may intersect and not perpendicular to the second direction.

When the spacing between the two adjacent transmit subarrays 210 along the first direction is less than or equal to the aperture length of the receive antenna array 300 along the second direction, the spacing may be used to adjust the aperture length of the virtual array to meet a use requirement. In addition, it may be further ensured that there is an overlapping area in the virtual array formed by the transmit antenna array 200 and the receive antenna array 300, to generate a half-wavelength small array with an array element spacing less than or equal to 0.5λ.

The spacing between two adjacent transmit subarrays 210 along the first direction may alternatively be greater than or equal to zero. For example, as shown in FIG. 2, the spacing between two adjacent transmit subarrays 210 along the first direction is greater than zero. Certainly, the spacing between two adjacent transmit subarrays 210 along the first direction may alternatively be equal to zero.

In this embodiment of this application, the spacing between two adjacent transmit subarrays 210 along the first direction is defined as a first transmit spacing (shown by N in FIG. 2), there is at least one first transmit spacing, each first transmit spacing is greater than or equal to zero, and each first transmit spacing is less than or equal to the aperture length of the receive antenna array 300 along the second direction.

In some possible implementations, the transmit antenna array 200 may include at least two first transmit spacings, and at least two of the first transmit spacings in the transmit antenna array 200 may be the same or all of the first transmit spacings in the transmit antenna array 200 may be different. For example, as shown in FIG. 2, two first transmit spacings in the transmit antenna array 200 are the same. Certainly, the two first transmit spacings in FIG. 2 may alternatively be different. When there are at least three first transmit spacings, in addition to being all the same or all different, the at least three first transmit spacings may alternatively be partially the same and partially different. Therefore, a plurality of first transmit spacings may be the same or partially the same, or may be different.

It may be understood that, when there are a plurality of first transmit spacings, there may be at least three transmit subarrays 210, and the at least three transmit subarrays 210 may be equally spaced along the first direction, or may be unequally spaced along the first direction, or a part of the transmit subarrays 210 may be equally spaced along the first direction.

Each transmit subarray 210 may include at least one transmit antenna 211. For example, as shown in FIG. 2, each transmit subarray 210 may include one transmit antenna 211. Certainly, there may alternatively be more than three, or less than three, or even zero transmit subarrays 210 including one transmit antenna 211. When at least one transmit subarray 210 includes a plurality of transmit antennas 211, the plurality of transmit antennas 211 in the at least one transmit subarray 210 may be spaced apart along the first direction.

Quantities of transmit antennas 211 in the transmit subarrays 210 may be different. For example, the transmit antenna array 200 may include three transmit subarrays 210. In the three transmit subarrays 210, a first transmit subarray 210 may include one transmit antenna 211, a second transmit subarray 210 may include three transmit antennas 211, and a third transmit subarray 210 may include six transmit antennas 211.

Alternatively, quantities of transmit antennas 211 in at least two transmit subarrays 210 in the transmit antenna array 200 may be the same. Quantities of transmit antennas 211 in the transmit subarrays 210 in the transmit antenna array 200 may be the same, or quantities of transmit antennas 211 in some of the transmit subarrays 210 in the transmit antenna array 200 may be the same, and quantities of transmit antennas 211 in the other transmit subarrays 210 may be different. For example, the transmit antenna array 200 may include three transmit subarrays 210. Two of the three transmit subarrays 210 may include three transmit antennas 211, and the other may include one transmit antenna 211; or each of the three transmit subarrays 210 may include one transmit antenna 211 (as shown in FIG. 2).

In this embodiment of this application, a spacing between two adjacent transmit antennas 211 in a same transmit subarray 210 along the first direction is defined as a second transmit spacing, at least one transmit subarray 210 may include at least one second transmit spacing, and correspondingly, the at least one transmit subarray 210 may include at least two transmit antennas 211. When the at least one transmit subarray 210 includes a plurality of second transmit spacings, a plurality of second transmit spacings in a same transmit subarray 210 may be the same, or may be partially the same, or may be different. In addition, when there are a plurality of transmit subarrays 210 including second transmit spacings, the second transmit spacings in the plurality of transmit subarrays 210 may be the same, or may be partially the same, or may be different.

When the transmit subarray 210 includes a plurality of transmit antennas 211, structures of the plurality of transmit antennas 211 in the same transmit subarray 210 may be the same or different, or may be partially the same and partially the same. In addition, structures of transmit antennas 211 in at least two of the transmit subarrays 210 may be the same, or may be different, or may be partially the same and partially different.

A specific structure of the transmit antenna 211 is not limited herein. The transmit antenna 211 may include but is not limited to a dipole antenna, a half-wave dipole antenna, a monopole antenna, a loop antenna, an inverted-F antenna (also referred to as an IFA, inverted-F antenna), a planar inverted-F antenna (also referred to as a PIFA, planar inverted-F antenna), a waveguide antenna (waveguide antenna), a horn antenna (horn antenna), a slot antenna (slot antenna), a paraboloid antenna (paraboloid antenna), a lens antenna (Lens antenna), a patch antenna, or the like.

The receive antenna array 300 may include at least two receive subarrays 310 arranged along the second direction. For example, as shown in FIG. 2, the receive antenna array 300 may include three receive subarrays 310 arranged along the second direction. Certainly, there may alternatively be more than three or less than three receive subarrays 310. Each of the receive subarrays 310 may include at least two receive antennas 311 arranged along the second direction. For example, as shown in FIG. 2, each of the receive subarrays 310 may include two receive antennas 311. Certainly, there may alternatively be more than three, or less than three, or even zero receive subarrays 310 including two receive antennas 311. Spacings between two adjacent receive antennas 311 in at least two of the receive subarrays 310 along the second direction are different (for example, d1 and d2 are different in FIG. 2), so that the receive antenna array 300 can be characterized by an irregular array.

The receive antenna array 300 may satisfy a formula: 0<|dₙ-dₙ₋₁|≤0.5λ, where dₙ is a spacing (for example, d2 shown in FIG. 2) between two adjacent receive antennas 311 in an n^{th} receive subarray 310 along the second direction, dₙ₋₁ is a spacing (for example, d1 shown in FIG. 2) between two adjacent receive antennas 311 in an (n-1)^{th} receive subarray 310 along the second direction, λ is an operating wavelength of the antenna array 110, and n is a positive integer. For example, n may be 1, 2, 3, or the like.

Correspondingly, the receive antenna array 300 satisfies a formula: 0<|dₙ-dₙ₋₁|≤0.5λ, so that the spacings between two adjacent receive antennas 311 in at least two of the receive subarrays 310 along the second direction are different, and further, the receive antenna array 300 can be characterized by the irregular array. In this way, a condition is provided for constructing a virtual array with no grating lobes for the antenna array 110, so that the antenna array 110 is characterized by no grating lobes and low side lobes.

A specific value of the spacing between two adjacent receive subarrays 310 along the second direction is not limited herein. For example, the receive antenna array 300 may further satisfy a formula: 0≤dₘ≤(dₙ+dₙ₋₁), where dₘ is a spacing (for example, M shown in FIG. 2) between the n^{th} receive subarray 310 and the (n-1)^{th} receive subarray 310 along the second direction, and m is a positive integer. For example, m may be 1, 2, 3, or the like. Because a first receive spacing is the spacing between two adjacent receive subarrays 310 along the second direction, the first receive spacing may be greater than or equal to 0 and less than or equal to (dₙ+dₙ₋₁).

Correspondingly, the receive antenna array 300 is limited to satisfy a formula: 0 ≤dₘ≤(dₙ+dₙ₋₁), so that an aperture of the virtual array and locations and a quantity of side lobes can be flexibly adjusted. In addition, a quantity of side lobes and side-lobe energy may be further reduced, so that performance of the antenna array 110 may be further improved.

In this embodiment of this application, the spacing between two adjacent receive subarrays along the second direction is defined as the first receive spacing (shown by M in FIG. 2), and the receive antenna array 300 may include at least one first receive spacing.

In some possible implementations, the receive antenna array 300 may include at least two first receive spacings, and at least two of the first receive spacings in the receive antenna array 300 may be the same or all of the first receive spacings in the receive antenna array 300 may be different. For example, as shown in FIG. 2, the receive antenna array 300 may include two same first receive spacings. Certainly, the two first receive spacings in FIG. 2 may alternatively be different. When there are at least three first receive spacings, in addition to that all of the first receive spacings are the same or different, the at least three first receive spacings may be partially the same and partially different.

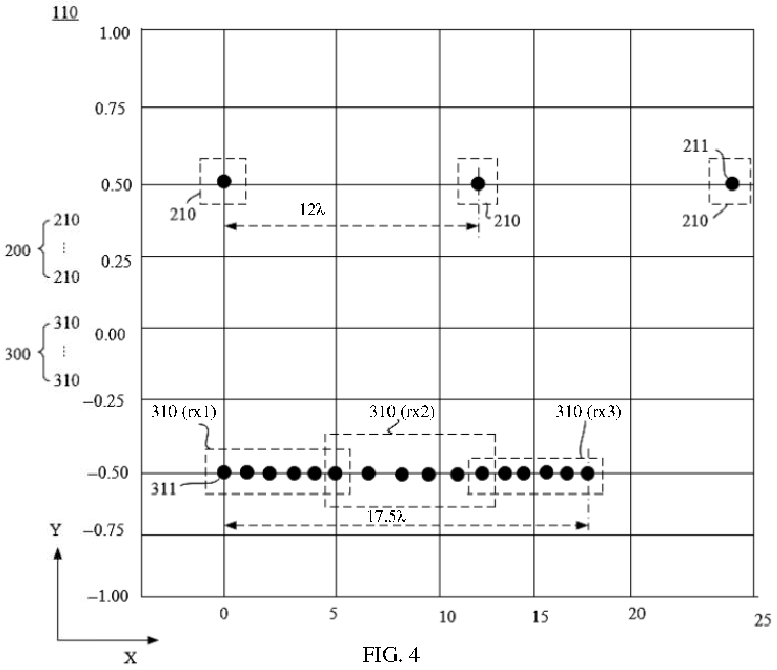

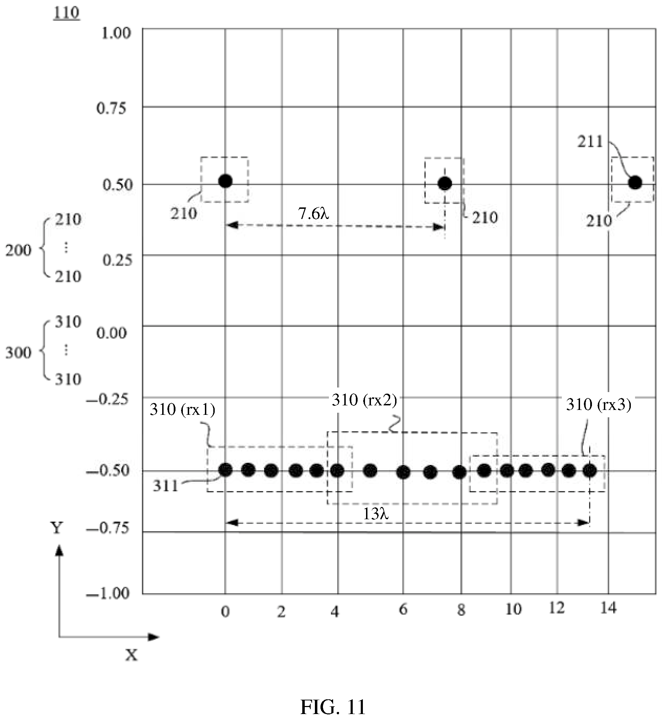

In some possible implementations, the receive antenna array 300 includes at least one first receive spacing, and at least one first receive spacing in the receive antenna array 300 is equal to zero. For example, as shown in FIG. 4 or FIG. 11, the receive antenna array 300 includes three first receive spacings, and all of the three first receive spacings are zero. Certainly, there may alternatively be fewer than three first receive spacings equal to zero. The first receive spacing is equal to zero, so that a size of the receive antenna array 300 along the second direction can be reduced, which helps reduce difficulty in arranging the receive antenna array 300.

It may be understood that, because the first receive spacing is the spacing between two adjacent receive subarrays 310 along the second direction, when there are a plurality of first receive spacings, the plurality of first receive spacings may be zero, or a part of the plurality of first receive spacings may be zero. For example, the receive antenna array 300 may include three receive subarrays 310. Therefore, there are two first receive spacings, and both the two first receive spacings may be zero (for example, as shown in FIG. 4 or FIG. 11), or one of the two first receive spacings may be zero, and the other may not be zero.

In some possible implementations, two adjacent receive subarrays 310 corresponding to at least one first receive spacing equal to zero share a same receive antenna 311. For example, as shown in FIG. 4 or FIG. 11 below, all of the first receive spacings in the receive antenna array 300 are equal to zero, and two adjacent receive subarrays 310 corresponding to each first receive spacing share a same receive antenna 311.

Correspondingly, when the first receive spacing is equal to zero, two adjacent receive subarrays 310 corresponding to the first receive spacing equal to zero share a same receive antenna 311, so that a quantity of receive antennas 311 can be reduced while the antenna array 110 is characterized by a large array aperture, high resolution, no grating lobes, and low side lobes, thereby helping reduce the size of the receive antenna array 300 along the second direction.

In some possible implementations, quantities of receive antennas 311 in at least two of the receive subarrays 310 in the receive antenna array 300 may be the same. For example, the receive antenna array 300 may include three receive subarrays 310, where two receive subarrays 310 may include five receive antennas 311 spaced apart along the second direction, and the remaining one receive subarray 310 may include three receive antennas 311. Alternatively, the receive antenna array 300 may include three receive subarrays 310, where each of the receive subarrays 310 may include three receive antennas 311.

In some possible implementations, quantities of receive antennas 311 in all receive subarrays 310 in the receive antenna array 300 may alternatively be different. For example, the receive antenna array 300 may include three receive subarrays 310. In the three receive subarrays 310, a first receive subarray 310 may include four receive antennas 311, a second receive subarray 310 may include five receive antennas 311, and a third receive subarray 310 may include seven receive antennas 311.

In this embodiment of this application, a spacing between two adjacent receive antennas 311 in a same receive subarray 310 along the second direction is defined as a second receive spacing (for example, d1 or d2 shown in FIG. 2), and each of the receive subarrays 310 may include at least one second receive spacing.

In some possible implementations, at least one receive subarray 310 may include at least two second receive spacings. For example, the receive antenna array 300 may include three receive subarrays 310, and each of the receive subarrays 310 may include four second receive spacings. Certainly, there may alternatively be more than three, or less than three, or even zero receive subarrays 310 with at least two second receive spacings. At least two of the second receive spacings in the at least one receive subarray 310 may be the same. For example, the receive antenna array 300 may include three receive subarrays 310, and second receive spacings in two of the receive subarrays 310 may be the same, or some of second receive spacings in two of the receive subarrays 310 may be the same, and the other second receive spacings may be different.

When a plurality of second receive spacings in the at least one receive subarray 310 are the same, a plurality of receive antennas 311 in the receive subarray 310 may be equally spaced along the second direction. In addition, when some of the plurality of second receive spacings in the receive subarray 310 are the same, the plurality of receive antennas 311 in the receive subarray 310 may be equally spaced along the second direction.

It should be noted that the plurality of second receive spacings in the at least one receive subarray 310 may be different in addition to being the same. In other words, at least three receive antennas 311 in the at least one receive subarray 310 are unequally spaced along the second direction.

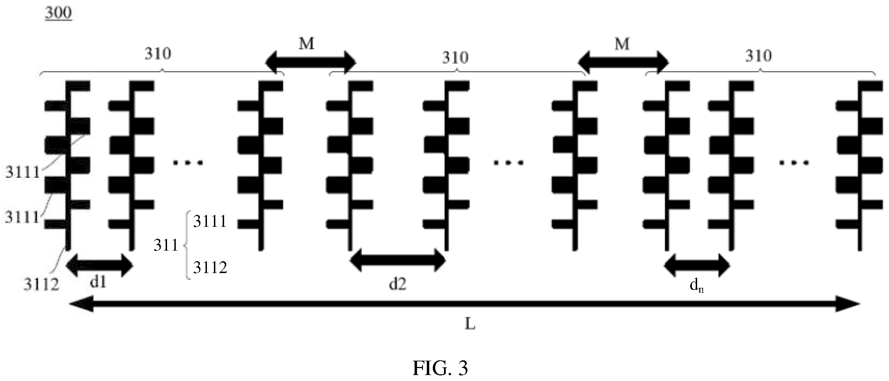

FIG. 3 is a diagram of a structure of a receive antenna array different from a receive antenna array in FIG. 2 according to an embodiment of this application.

Whether structures of receive antennas 311 in receive subarrays 310 are the same is not limited herein. For example, refer to FIG. 3. Structures of the receive antennas 311 in the receive subarrays 310 are the same, and structures of receive antennas 311 in any two receive subarrays 310 are the same. Certainly, structures of receive antennas 311 in at least two receive subarrays 310 may alternatively be different. In addition, structures of at least two receive antennas 311 in the at least one receive subarray 310 may also be different.

A specific structure of the receive antenna 311 is not limited herein. For example, refer to FIG. 3. The receive antenna 311 may be a patch antenna, and the receive antenna 311 may include a feeding unit 3112 and a plurality of radiating elements 3111. A plurality of radiating elements 3111 are separately disposed on two sides of the feeding unit 3112, and the radiating elements 3111 on the two sides of the feeding unit 3112 are alternately arranged.

In conclusion, when the receive antenna array 300 satisfies a formula: 0<|dₙ-dₙ₋₁|≤0.5λ, second receive spacings of at least two of the receive subarrays 310 in the receive antenna array 300 are different, and the spacing between two adjacent transmit subarrays 210 along the first direction is less than or equal to the aperture length of the receive antenna array 300 along the second direction, the virtual array may be formed by a plurality of regular arrays with unequal spacings. Therefore, the antenna array 110 can be characterized by a large array aperture, high resolution, no grating lobes, and low side lobes. Because the antenna array 110 is characterized by no grating lobes and low side lobes, difficulty and computational power requirements of backend algorithm processing can be reduced. In addition, an appropriate transmit antenna 211 and receive antenna 311 may be selected based on angle information of side lobes in the antenna array 110, thereby further reducing side-lobe energy in the antenna array 110.

In an arraying process in which the transmit antenna array 200 and the receive antenna array 300 form the virtual array, there is a location overlapping area between two adjacent receive subarrays 310, and there is a half-wavelength small array with an array element spacing less than or equal to 0.5λ in the location overlapping area. The array is characterized by no grating lobes and low side lobes, and may provide a new solution to false alarms caused by a plurality of targets and a large reflection target. In addition, because the virtual array is formed by the plurality of regular arrays with unequal spacings, during backend algorithm processing, a half-wavelength large array with no grating lobes may be obtained through array interpolation, so that side-lobe energy can be further reduced, thereby helping further improve performance of the antenna.

The following describes in detail the antenna array 110 provided in embodiments of this application with reference to specific embodiments.

### Embodiment 1:

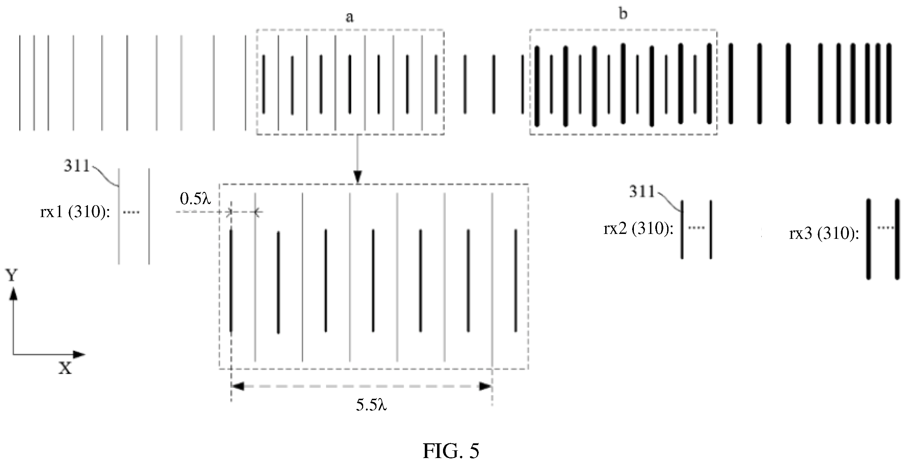

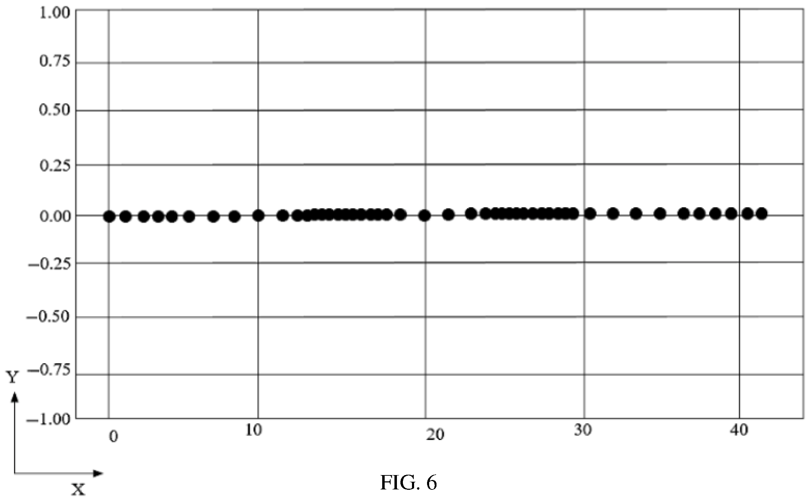

FIG. 4 is a diagram of a structure of a second antenna array according to an embodiment of this application. FIG. 5 is a diagram of an arraying process in which the antenna array forms a virtual array in FIG. 4. FIG. 6 is a diagram of location information of the virtual array formed by the antenna array in FIG. 4.

Refer to FIG. 4. The antenna array 110 provided in Embodiment 1 may include a transmit antenna array 200 and a receive antenna array 300. The transmit antenna array 200 and the receive antenna array 300 are spaced apart in a vertical direction (for example, a Y direction in FIG. 4). In the vertical direction, a projection of the transmit antenna array 200 partially overlaps a projection of the receive antenna array 300.

Still refer to FIG. 4. The transmit antenna array 200 may include three transmit subarrays 210, the three transmit subarrays 210 are equally spaced along a first direction, a spacing between two adjacent transmit subarrays 210 along the first direction is 12λ, and each transmit subarray 210 may include one transmit antenna 211. The first direction is parallel to a horizontal direction (for example, an X direction in FIG. 4).

Still refer to FIG. 4. The receive antenna array 300 may include three receive subarrays 310, the three receive subarrays 310 are arranged along a second direction, and the second direction is parallel to the horizontal direction. A spacing between two adjacent receive subarrays 310 along the second direction is zero, which meets a requirement. Each of the receive subarrays 310 includes six receive antennas 311 that are spaced apart along the second direction, and two adjacent receive subarrays 310 share one receive antenna 311. Therefore, the receive antenna array 300 includes 16 receive antennas 311. In the first receive subarray 310 (for example, rx1 in FIG. 4), six receive antennas 311 are equally spaced along the second direction, and a spacing between two adjacent receive antennas 311 along the second direction is 1λ. In the second receive subarray 310 (for example, rx2 in FIG. 4), six receive antennas 311 are equally spaced along the second direction, and a spacing between two adjacent receive antennas 311 along the second direction is 1.5λ. In the third receive subarray 310 (for example, rx3 in FIG. 4), six receive antennas 311 are equally spaced along the second direction, and a spacing between two adjacent receive antennas 311 along the second direction is 1λ.

With reference to FIG. 4, it can be learned that the spacing between two adjacent transmit subarrays 210 along the first direction is 12λ, and an aperture length of the receive antenna array 300 along the second direction is equal to 17.5λ. Therefore, the spacing between two adjacent transmit subarrays 210 along the first direction is greater than zero and less than the aperture length of the receive antenna array 300 along the second direction, which meets a requirement. Refer to FIG. 4. The aperture length of the receive antenna array 300 along the second direction may be understood as a spacing between a leftmost receive antenna 311 and a rightmost receive antenna 311 along the second direction.

With reference to FIG. 4, it can be learned that an absolute value of a difference between the spacing between two adjacent receive antennas 311 in the first receive subarray 310 and the spacing between two adjacent receive antennas 311 in the second receive subarray 310 is equal to 0.5λ, and an absolute value of a difference between the spacing between two adjacent receive antennas 311 in the second receive subarray 310 and the spacing between two adjacent receive antennas 311 in the third receive subarray 310 is equal to 0.5λ, which satisfies a formula: 0<|dₙ-dₙ₋₁|≤0.5λ.

Because the transmit antenna array 200 includes the three transmit antennas 211, and the receive antenna array 300 includes the 16 receive antennas 311, the transmit antenna array 200 and the receive antenna array 300 may virtually form a virtual array including 3×16 virtual channels, and the 3×16 virtual channels in the virtual array are arranged in the horizontal direction. In other words, the antenna array 110 may form a 1×48 virtual array, where 1 indicates that the virtual array is one-dimensionally distributed, and 48 indicates that the virtual array has 48 virtual channels arranged in the horizontal direction (as shown in FIG. 6).

With reference to FIG. 5, it can be learned that, in an arraying process of the virtual array, there is a location overlapping area between the first receive subarray 310 and the second receive subarray 310 (shown by a dashed-line box a in FIG. 5), and there is a location overlapping area between the second receive subarray 310 and the third receive subarray 310 (shown by a dashed-line box b in FIG. 5). A difference between array element spacings in the two location overlapping areas is 0.5λ, an aperture length in the overlapping area is 5.5λ, and a half-wavelength array in the overlapping area is characterized by no grating lobes, which may provide a new solution to false alarms caused by a plurality of targets and a large reflection target in a traffic radar.

With reference to FIG. 6, it can be learned that an aperture length of the virtual array formed by the antenna array 110 in FIG. 4 is 41.5λ, and a corresponding angular resolution calculated based on the aperture length of the virtual array is approximately 1.38°, which meets requirements of a large array aperture and high resolution.

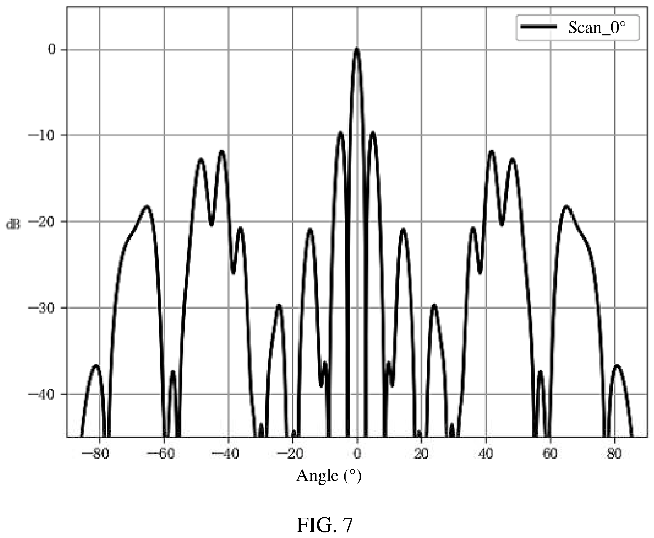

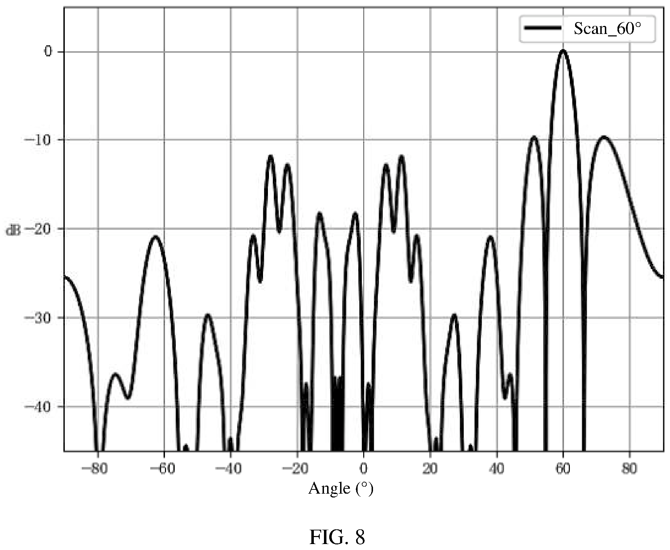

FIG. 7 shows an array factor pattern of the virtual array shown in FIG. 6 during scanning at 0°. FIG. 8 shows an array factor pattern of the virtual array shown in FIG. 6 during scanning at 60°.

With reference to FIG. 7, it can be learned that in the array factor pattern during scanning at 0°, there are no grating lobes, and there are eight side lobes with high energy (where six side lobes are concentrated in a large-angle area outside ±40°). With few side lobes and low side-lobe energy, the antenna array 110can be characterized by low side lobes. It can be learned from FIG. 8 that there are still no grating lobes in the array factor pattern during scanning at 60°, indicating that the antenna array 110 is characterized by wide-angle scanning and a high dynamic range.

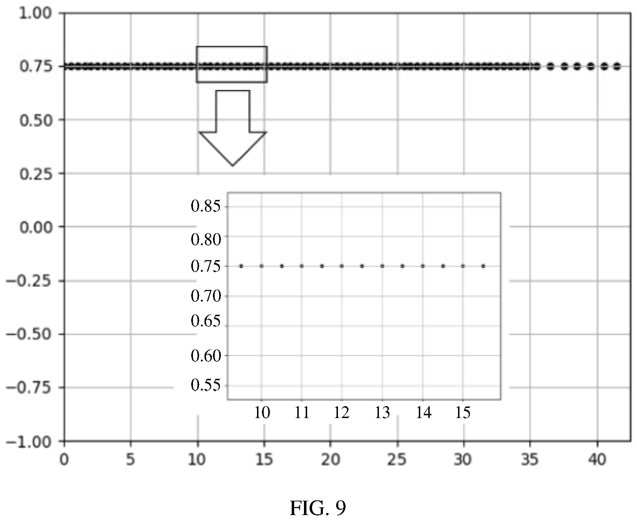

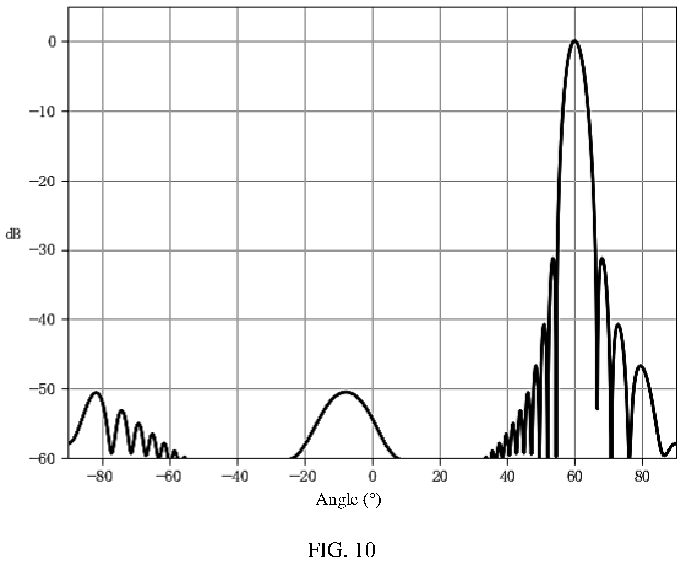

FIG. 9 is a diagram of location information of the virtual array in FIG. 6 after backend algorithm processing. FIG. 10 is an array factor pattern of the virtual array in FIG. 9 during scanning at 60°.

After backend algorithm processing (for example, array interpolation) is performed on the array location information of the virtual array in FIG. 6, as shown in FIG. 9, a large array with no grating lobes that is less than and equal to 0.5λ may be obtained. During scanning at 60° in the array factor pattern of the large array (as shown in FIG. 10), the large array is characterized by no grating lobes and low side lobes, and may be used to mitigate false alarms caused by the plurality of targets and the large reflection target in the traffic radar.

### Embodiment 2:

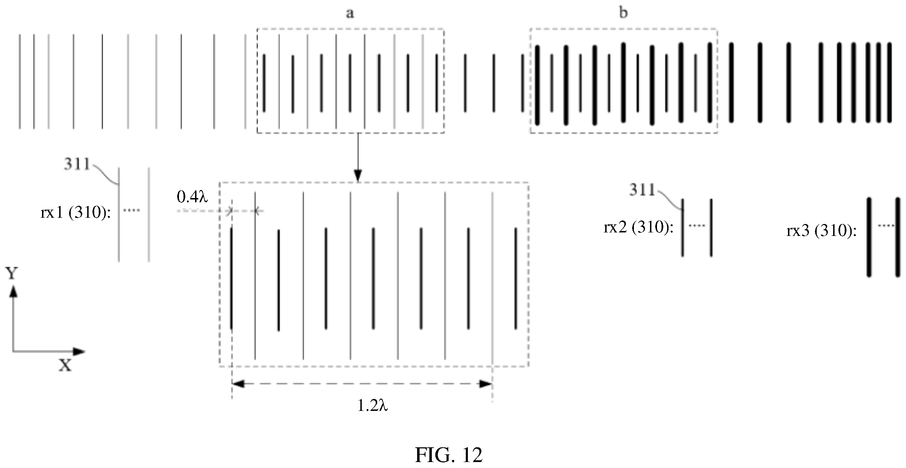

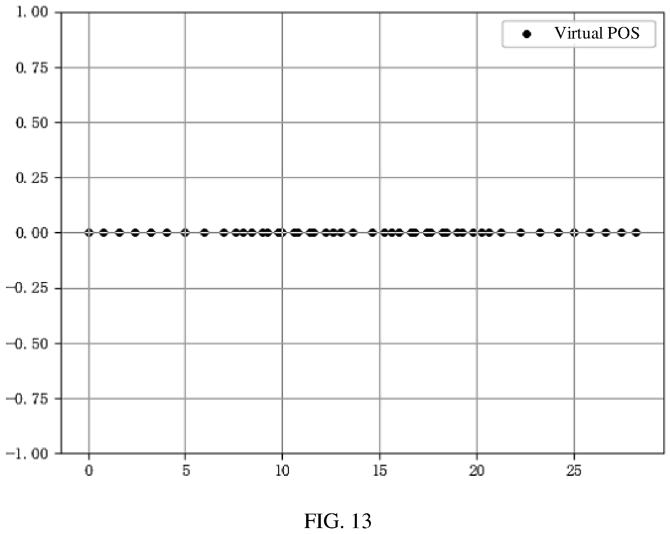

FIG. 11 is a diagram of a structure of a third antenna array according to an embodiment of this application. FIG. 12 is a diagram of an arraying process in which the antenna array forms a virtual array in FIG. 11. FIG. 13 is a diagram of location information of the virtual array formed by the antenna array in FIG. 11.

Refer to FIG. 11. The antenna array 110 provided in Embodiment 2 may include a transmit antenna array 200 and a receive antenna array 300. The transmit antenna array 200 and the receive antenna array 300 are spaced apart in a vertical direction (for example, a Y direction in FIG. 11). In the vertical direction, a projection part of the transmit antenna array 200 overlaps a projection of the receive antenna array 300.

Still refer to FIG. 11. The transmit antenna array 200 may include three transmit subarrays 210, the three transmit subarrays 210 are equally spaced along a first direction, a spacing between two adjacent transmit subarrays 210 along the first direction is 7.6λ, and each transmit subarray 210 may include one transmit antenna 211. The first direction is parallel to a horizontal direction.

Still refer to FIG. 11. The receive antenna array 300 may include three receive subarrays 310, the three receive subarrays 310 are arranged along a second direction, and the second direction is parallel to the horizontal direction. A spacing between two adjacent receive subarrays 310 along the second direction is zero, which meets a requirement. Each of the receive subarrays 310 includes six receive antennas 311 that are spaced apart along the second direction, and two adjacent receive subarrays 310 share one receive antenna 311. Therefore, the receive antenna array 300 includes 16 receive antennas 311. In the first receive subarray 310 (for example, rx1 in FIG. 11), six receive antennas 311 are equally spaced along the second direction, and a spacing between two adjacent receive antennas 311 along the second direction is 0.8λ. In the second receive subarray 310 (for example, rx2 in FIG. 11), six receive antennas 311 are equally spaced along the second direction, and a spacing between two adjacent receive antennas 311 along the second direction is 1λ. In the third receive subarray 310 (for example, rx3 in FIG. 11), six receive antennas 311 are equally spaced along the second direction, and a spacing between two adjacent receive antennas 311 along the second direction is 0.8λ.

With reference to FIG. 11, it can be learned that the spacing between two adjacent transmit subarrays 210 along the first direction is 7.6λ, and an aperture length of the receive antenna array 300 along the second direction is equal to 13λ. Therefore, the spacing between two adjacent transmit subarrays 210 along the first direction is greater than zero and less than the aperture length of the receive antenna array 300 along the second direction, which meets a requirement. Refer to FIG. 11. The aperture length of the receive antenna array 300 along the second direction may be understood as a spacing between a center of the leftmost receive antenna 311 along the second direction and a center of the rightmost receive antenna 311 along the second direction.

With reference to FIG. 11, it can be learned that an absolute value of a difference between the spacing between two adjacent receive antennas 311 in the first receive subarray 310 and the spacing between two adjacent receive antennas 311 in the second receive subarray 310 is equal to 0.2λ, and an absolute value of a difference between the spacing between two adjacent receive antennas 311 in the second receive subarray 310 and the spacing between two adjacent receive antennas 311 in the third receive subarray 310 is equal to 0.2λ, which satisfies a formula: 0<|dₙ-dₙ₋₁|≤0.5λ.

Because the transmit antenna array 200 includes the three transmit antennas 211, and the receive antenna array 300 includes the 16 receive antennas 311, the transmit antenna array 200 and the receive antenna array 300 may virtually form a virtual array (as shown in FIG. 13) including 3×16 virtual channels, and the 3×16 virtual channels in the virtual array are arranged in the horizontal direction. In other words, the antenna array 110 may form a 1×48 virtual array, where 1 indicates that the virtual array is one-dimensionally distributed, and 48 indicates that the virtual array has 48 virtual channels.

With reference to FIG. 12, it can be learned that, in an arraying process of the virtual array, there is a location overlapping area between the first receive subarray 310 and the second receive subarray 310 (shown by a dashed-line box a in FIG. 12), and there is a location overlapping area between the second receive subarray 310 and the third receive subarray 310 (shown by a dashed-line box b in FIG. 12). A difference between array element spacings in the two location overlapping areas is 0.4λ, an aperture length in the overlapping area is 1.2λ, and a half-wavelength array in the overlapping area is characterized by no grating lobes, which may provide a new solution to false alarms caused by a plurality of targets and a large reflection target in a traffic radar.

With reference to FIG. 13, it can be learned that an aperture length of the virtual array formed by the transmit antenna array 200 and the receive antenna array 300 in FIG. 11 is 28.2λ, and a corresponding angular resolution calculated based on the aperture length of the virtual array is approximately 2.03°, which meets requirements of a large array aperture and high resolution.

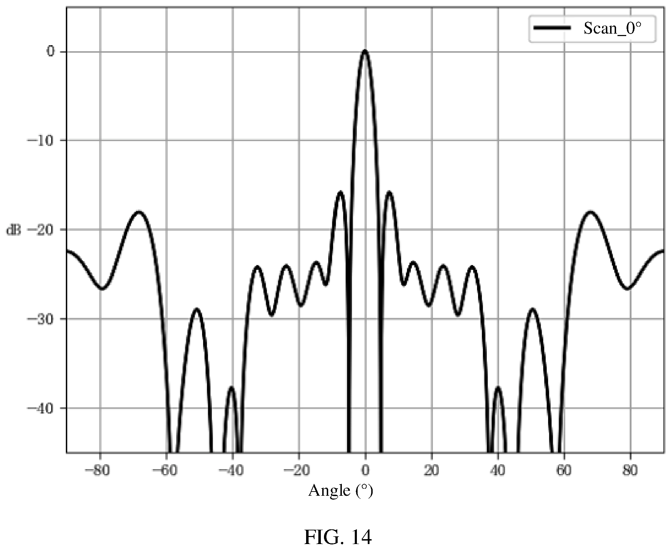

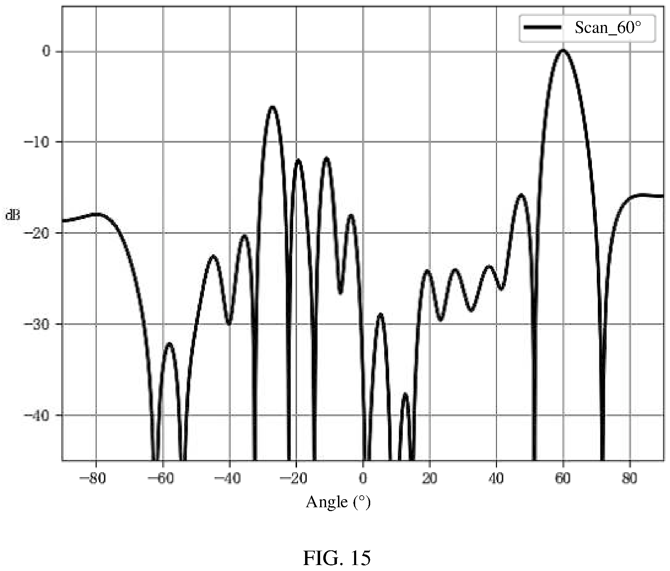

FIG. 14 shows an array factor pattern of the virtual array shown in FIG. 13 during scanning at 0°. FIG. 15 shows an array factor pattern of the virtual array shown in FIG. 13 during scanning at 60°.

With reference to FIG. 14, it can be learned that in the array factor pattern, there are no grating lobes, and there are two side lobes with high energy (where the two side lobes are concentrated in a large-angle area outside ±60°). With few side lobes and low side-lobe energy, the antenna array 110 can be characterized by low side lobes. It can be learned from FIG. 15 that there are still no grating lobes in the array factor pattern during scanning at 60°, indicating that the antenna array 110 is characterized by wide-angle scanning and a high dynamic range.

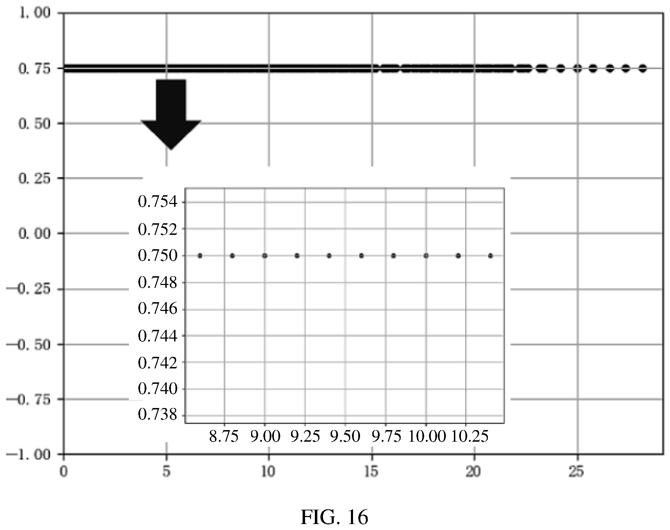

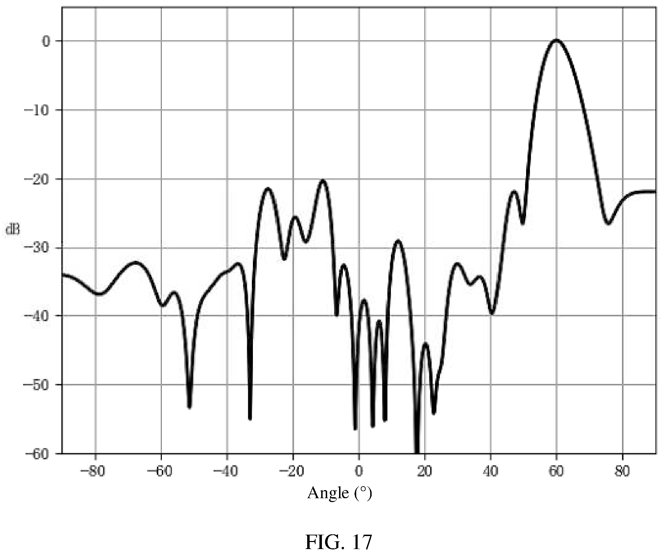

FIG. 16 is a diagram of location information of the virtual array in FIG. 13 after backend algorithm processing. FIG. 17 is an array factor pattern of the virtual array in FIG. 16 during scanning at 60°.

After backend algorithm processing (for example, array interpolation) is performed on the array location information of the virtual array in FIG. 13, as shown in FIG. 16, a large array with no grating lobes that is less than and equal to 0.5λ may be obtained. During scanning at 60° in the array factor pattern of the large array (as shown in FIG. 17), the large array is characterized by no grating lobes and low side lobes, and may be used to mitigate false alarms caused by the plurality of targets and the large reflection target in the traffic radar.

In descriptions of embodiments of this application, it should be noted that, unless otherwise clearly specified and limited, the terms "installation", "interconnection", and "connection" shall be understood in a broad sense. For example, the "connection" may be a fixed connection, may be an indirect connection through an intermediate medium, or may be communication inside two elements or an interaction relationship between two elements. A person of ordinary skill in the art may understand specific meanings of the foregoing terms in embodiments of this application based on specific cases.

An apparatus or element in embodiments of this application or an implied apparatus or element needs to have a specific orientation and be constructed and operated in a specific orientation, and therefore cannot be construed as a limitation on embodiments of this application. In the descriptions of embodiments of this application, unless otherwise exactly and specifically ruled, "a plurality of" means two or more than two.

In the specification, claims, and accompanying drawings of embodiments of this application, the terms "first", "second", "third", "fourth", and so on (if existent) are intended to distinguish between similar objects but do not necessarily indicate a specific order or sequence. It may be understood that the data used in such a way is interchangeable in proper circumstances, so that embodiments of this application described herein can be implemented in other sequences than the sequence illustrated or described herein. In addition, the terms "include" and "have" and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The term "a plurality of" in this application means two or more than two. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects, and the character "/" in a formula indicates a "division" relationship between associated objects.

It may be understood that various numbers in embodiments of this application are merely used for differentiation for ease of description, and are not used to limit the scope of embodiments of this application.

It may be understood that sequence numbers of the foregoing processes do not mean execution sequences in embodiments of this application. The execution sequences of the processes should be determined based on functions and internal logic of the processes, and shall not be construed as any limitation on the implementation processes of embodiments of this application.

## Claims

1. An antenna array, comprising a transmit antenna array and a receive antenna array, wherein
the transmit antenna array and the receive antenna array are configured to form a virtual array;
the transmit antenna array comprises at least two transmit subarrays arranged along a first direction, and a spacing between two adjacent transmit subarrays along the first direction is less than or equal to an aperture length of the receive antenna array along a second direction;
the receive antenna array comprises at least two receive subarrays arranged along the second direction, and each of the receive subarrays comprises at least two receive antennas arranged along the second direction; and
the receive antenna array satisfies a formula: 0<|dₙ-dₙ₋₁|≤0.5λ, wherein dₙ is a spacing between two adjacent receive antennas in an n^{th} receive subarray along the second direction, dₙ₋₁ is a spacing between two adjacent receive antennas in an (n-1)^{th} receive subarray along the second direction, λ is an operating wavelength of the antenna array, and n is a positive integer.

2. The antenna array according to claim 1, wherein a spacing between two adjacent transmit subarrays along the first direction is greater than or equal to zero.

3. The antenna array according to claim 1 or 2, wherein the transmit antenna array comprises at least two first transmit spacings, at least two of the first transmit spacings in the transmit antenna array are the same or all of the first transmit spacings in the transmit antenna array are different, and a spacing between two adjacent transmit subarrays along the first direction is defined as the first transmit spacing.

4. The antenna array according to any one of claims 1 to 3, wherein each transmit subarray comprises at least one transmit antenna, and
quantities of transmit antennas in at least two of the transmit subarrays in the transmit antenna array are the same; or
quantities of transmit antennas in all of the transmit subarrays in the transmit antenna array are different.

5. The antenna array according to any one of claims 1 to 4, wherein the receive antenna array further satisfies a formula: 0≤dₘ≤(dₙ+dₙ₋₁), wherein dₘ is a spacing between the n^{th} receive subarray and the (n-1)^{th} receive subarray along the second direction, and m is a positive integer.

6. The antenna array according to any one of claims 1 to 5, wherein the receive antenna array comprises at least two first receive spacings, at least two of the first receive spacings in the receive antenna array are the same or all of the first receive spacings in the receive antenna array are different, and a spacing between two adjacent receive subarrays along the first direction is defined as the first receive spacing.

7. The antenna array according to any one of claims 1 to 5, wherein the receive antenna array comprises at least one first receive spacing, at least one first receive spacing in the receive antenna array is equal to zero, and a spacing between two adjacent receive subarrays along the first direction is defined as the first receive spacing.

8. The antenna array according to claim 7, wherein two adjacent receive subarrays corresponding to the at least one first receive spacing equal to zero share a same receive antenna.

9. The antenna array according to any one of claims 1 to 8, wherein quantities of receive antennas in at least two of the receive subarrays in the receive antenna array are the same; or
quantities of receive antennas in all of the receive subarrays in the receive antenna array are different.

10. The antenna array according to any one of claims 1 to 9, wherein at least one receive subarray comprises at least two second receive spacings, at least two of the second receive spacings in the at least one receive subarray are the same, and a spacing between two adjacent receive antennas in a same receive subarray along the second direction is defined as the second receive spacing.

11. A radar, comprising the antenna array according to any one of claims 1 to 10.

12. An electronic device, comprising the antenna array according to any one of claims 1 to 10 or comprising the radar according to claim 11.

13. A vehicle, comprising the antenna array according to any one of claims 1 to 10 or the radar according to claim 11.
